# EUROPÄISCHE PATENTANMELDUNG

(11) **EP 1 172 272 A1**
(43) Veröffentlichungstag der Anmeldung: **16.01.2002**
(21) Anmeldenummer: 01115045.5
(22) Anmeldetag: 21.06.2001
(51) Int. Cl.: B60T 13/66, B60T 13/74, B60T 17/22, B60T 7/10

(54) **Bremsanlage für ein Kraftfahrzeug sowie Verfahren zu ihrer Steuerung**

(30) Priorität: 12.07.2000 DE 10033835
(71) Anmelder: Continental Teves AG & Co. oHG, 60488 Frankfurt (DE)
(72) Erfinder: Burgdorf, Jochen, 63075 Offenbach (DE)

(57) **Zusammenfassung**

Die vorliegende Erfindung betrifft eine Bremsanlage für ein Kraftfahrzeug mit einem Bedienmodul (7) zur Aufnahme eines Fahrerwunsches, mit einer insbesondere elektrisch betätigbaren Fremd- bzw. Hilfskraftquelle (12), die vom Bedienmodul (7) ansteuerbar ist und mit deren Kraft Radbremsen (3, 4, 5, 6) des Kraftfahrzeuges durch eine elektronische Steuereinheit (13) beaufschlagbar sind und mit einem Mittel zur Erkennung eines Ausfalls der Fremd- bzw. Hilfskraftquelle (12), wobei zumindest eine Radbremse im Falle einer Notbremsung, d. h. bei Betätigung des Bedienmoduls (7) sowie bei Ausfall der Fremd- bzw. Hilfskraftquelle (12) bzw. ihrer Energieversorgung, über die am Bedienmodul (7) wirksame Betätigungskraft des Fahrers beaufschlagbar ist. Zur Verstärkung der in Falle einer solchen Notbremsung zur Verfügung stehenden Gesamtbremswirkung weist die Bremsanlage zumindest einen elektrisch betätigbaren Aktuator (25) eines Feststellbremssystems (2) auf, durch den wenigstens eine Radbremse (5, 6) beaufschlagbar ist und der mit der Steuereinheit (13) verbunden ist, wobei der Aktuator (25) bei einer Notbremsung automatisch mittels der Steuereinheit angesteuert wird. Somit wird vorteilhaft die physische Betätigungskraft des Fahrers mit der Betätigungskraft zumindest eines Aktuators (25) überlagert.

## Beschreibung

Die vorliegende Erfindung betrifft eine Bremsanlage für Kraftfahrzeuge mit einer insbesondere elektrisch betätigbaren Fremd- bzw. Hilfskraftquelle, durch die bei erkanntem Bremswunsch des Fahrers die Radbremsen mit einer Bremskraft beaufschlagt werden.

Eine derartige Bremsanlage mit einem elektronisch regelbaren Bremsbetätigungssystem ist beispielsweise aus der DE 198 05 244 A1 bekannt. Danach umfasst das Bremsbetätigungssystem ein Bedienmodul mit einer Pedaleinheit inklusive Pedalwegsimulator, einen Hauptbremszylinder mit einem Druckmittelvorratsbehälter sowie einen Betätigungswegsensor. Das Bedienmodul dient im wesentlichen der Aufnahme des Bremswunsches des Fahrers innerhalb des Betätigungswegsensors zur entsprechenden Ansteuerung einer Fremdkraftquelle, durch die die Radbremsen mit einem Bremskraft beaufschlagt werden können. Dabei ist die Fremdkraftquelle als elektro-hydraulisches Motor-Pumpen-Aggregat ausgebildet, das auf Grundlage elektrischer Ansteuersignale einen hydraulische Druck aufbauen und über elektronisch steuerbare Ventile in die Radbremsen einspeisen kann. Insgesamt handelt es sich damit um eine elektro-hydraulische Betriebsbremsanlage, für die die Zuspannkraft der Radbremsen im Normalbetrieb von der Fremdkraftquelle geliefert wird. Im Falle einer Notbremsung, d. h. bei Ausfall der Fremdkraftquelle bzw. der Energieversorgung der Fremdkraftquelle, sieht das genannte Bremsbetätigungssystem eine hydraulische Rückfallebene vor. Dabei werden die Radbremsen durch die verbleibende Betätigungskraft des Fahrers, die an der Pedaleinheit anliegt, direkt mit hydraulischem Druck beaufschlagt. Der über die Pedaleinheit im Hauptbremszylinder aufgebaute Druck wird bei der Notbremsung direkt in die Radbremsen eingeleitet. Durch den Wegfall der Fremdkraftquelle im Falle einer Notbremsung steht nur eine reduzierte Gesamtbremsleistung zur Verfügung, da die vom Fahrer aufzubringende Pedalkraft begrenzt ist. Letztlich besteht damit die Gefahr, unsicherer sowie unbeherrschbarer Fahrzustände.

Aus der DE 195 16 639 A1 ist es ferner bekannt eine elektrisch betätigbare Feststellbremsanlage im Falle einer Notbremsung, d. h. bei Ausfall des Betriebsbremssystems zur Gewährleistung einer Mindestbremswirkung heranzuziehen. Dabei greift die Feststellbremsanlage auf eine fremdansteuerbare Kraftquelle zur Beaufschlagung der Radbremsen zurück. Die Kraftquelle wird ihrerseits von einer eigenen Ansteuerungseinrichtung angesteuert, die unabhängig von den Bedieneinrichtungen der Betriebs- und Feststellbremsanlage vorgesehen ist. Eine solche separate Ansteuerungseinrichtung ist beispielsweise als elektrischer Taster ausgeführt. Dies erfordert vom Fahrer bei einer Notbremsung die zusätzliche Betätigung der von der Bedieneinrichtung der Betriebsbremse (üblicherweise Bremspedal) getrennten Ansteuerungseinrichtung. Der Fahrers wird dadurch zusätzlich belastet, zumal in der Praxis bei einer Notbremsung häufig kritische Fahrzustände erreicht werden, in denen der Fahrer ohnehin voll gefordert ist. In jedem Fall kann sich die Reaktionszeit des Fahrers, die in einer solchen Situation verstreicht, bis der Fahrer die unabhängige Ansteuerungseinrichtung betätigt, nachteilig auswirken.

Angesichts dessen besteht die Aufgabe der Erfindung darin, eine Bremsanlage mit einer Fremdkraftquelle anzugeben, die im Falle einer Notbremsung, d. h. bei Ausfall der Fremdkraftquelle bzw. der Versorgungsenergie der Fremdkraftquelle eine verbesserte Gesamtbremswirkung an den Radbremsen aufweist.

Gelöst wird die Aufgabe durch die Merkmalskombination des Patentanspruches 1. Danach umfasst die Bremsanlage für ein Kraftfahrzeug ein Bedienmodul zur Aufnahme eines Fahrerwunsches hinsichtlich der Betriebsbremsbetätigung, eine insbesondere elektrisch betätigbare Fremd- bzw. Hilfskraftquelle, die vom Bedienmodul ansteuerbar ist und mit deren Kraft Radbremsen des Kraftfahrzeuges durch eine elektronische Steuereinheit beaufschlagbar sind, und eines Mittels zur Erkennung eines Ausfalls der Fremd- bzw. Hilfskraftquelle. Unter einer Fremdkraftquelle wird dabei eine fremdansteuerbare Kraft-bzw. Energiequelle verstanden, die in der Lage ist die Radbremsen entsprechend dem Fahrerbremswunsch eigenständig zu betätigen. Das heißt die jeweilige Radbremse wird allein durch die Kraft der Fremdkraftquelle beaufschlagt. Solche Fremdkraftquellen sind beispielsweise als Motor-Pumpen-Aggregate, Druckspeicher oder ESP- bzw. ASR-Pumpe ausgeführt. Eine Hilfskraftquelle hingegen dient der Verstärkung der vom Fahrer physisch in die Bremsanlage eingeleiteten Betätigungskraft. Eine solche Hilfskraftquelle kann beispielsweise als fremdansteuerbarer Bremskraftverstärker oder sonstiger elektrisch, hydraulisch bzw. pneumatisch wirksamer Verstärker ausgeführt sein. Das Bedienmodul ist vorzugsweise als Pedaleinheit mit einem Hauptbremszylinder und einem Druckmittelvorratsbehälter ausgeführt. Es beinhaltet weiterhin insbesondere einen Pedalwegsimulator mit Betätigungswegsensor, um den Bremswunsch des Fahrers ausgehend vom Zustand des Bedienmoduls zu erfassen. Das Mittel zur Erkennung des Ausfalls der Fremd- bzw. Hilfskraftquelle ist vorzugsweise als Sensor mit elektronischer Auswerteschaltung ausgebildet, der in der Lage ist, einen fehlerhaften Betrieb der Fremd- bzw. Hilfskraftquelle zu detektieren. Im Normalzustand der Bremsanlage wird die Fremd- bzw. Hilfskraftquelle dem Fahrerwunsch entsprechend angesteuert, um die Radbremsen mit der erforderlichen Bremskraft zu beaufschlagen. Im Falle einer Notbremsung, d. h. bei Betätigung des Bedienmoduls sowie bei Ausfall der Fremd- bzw. Hilfskraftquelle bzw. bei Ausfall der Versorgungsenergie der Fremd- bzw. Hilfskraftquelle werden die Radbremsen zunächst über die am Bedienmodul wirksame Betätigungskraft des Fahrers beaufschlagt. Diese begrenzte Betätigungskraft des Fahrers, die durch Muskelkraft an der Pedaleinheit aufgebracht wird, ist für sich gesehen üblicherweise unzureichend und wird zudem häufig nicht auf alle Radbremsen übertragen. Daher weist die Bremsanlage erfindungsgemäß zumindest einen elektrisch betätigbaren Aktuator eines Feststellbremssystems auf, durch den wenigstens eine Radbremse beaufschlagbar ist und der mit der Steuereinheit derart verbunden ist, dass der Aktuator bei einer Notbremsung automatisch mittels der Steuereinheit angesteuert wird. Diese vom Aktuator gelieferte Bremskraft wird bei einer Notbremsung der vom Fahrer an der Pedaleinheit physisch eingesteuerten Betätigungskraft überlagert. Insgesamt wird dadurch bei einer Notbremssituation eine Erhöhung der an den Radbremsen zur Verfügung stehenden Bremswirkung erreicht.

Besonders wirkungsvoll lässt sich diese Form der Überlagerung der vom Fahrer physisch eingesteuerten Bremskraft mit der Betätigungskraft des Aktuators im Falle einer Notbremsung bei einer elektro-hydraulischen Bremsanlage umsetzen, bei der die Fremdkraftquelle als elektro-hydraulisches Motor-Pumpen-Aggregat ausgebildet ist. Grundsätzlich ist der erfindungsgemäße Ansatz jedoch auf jede Bremsanlage anwendbar, die eine aktive Fremd- bzw. Hilfskraftquelle zur Beaufschlagung der Radbremsen mit einer Bremskraft aufweist. Hierunter fallen beispielsweise Hilfskraftquellen, wie fremdansteuerbare Bremskraftverstärker bzw. Booster. Bei Ausfall derartiger Fremd- bzw. Hilfskraftquellen steht ausgehend von der reinen Fahrerbetätigung durch Muskelkraft jeweils nur eine begrenzte Bremskraft zur Verfügung, die wirkungsvoll mit der vom Aktuator des Feststellbremssystems bereitgestellten Betätigungskraft für die Radbremsen überlagert wird.

Weiterhin wird erfindungsgemäß für ein Verfahren zur Steuerung einer bereits genannten Bremsanlage für ein Kraftfahrzeug um Schutz ersucht. Die Bremsanlage umfasst ein Bedienmodul zur Aufnahme eines Fahrerwunsches, eine insbesondere elektrisch betätigbare Fremd- bzw. Hilfskraftquelle, die vom Bedienmodul ansteuerbar ist und mit deren Kraft Radbremsen des Kraftfahrzeuges durch eine elektronische Steuereinheit beaufschlagt werden, und ein Mittel zur Erkennung eines Ausfalles der Fremd- bzw. Hilfskraftquelle, wobei zumindest eine Radbremse im Falle einer Notbremsung, d. h. bei Betätigung des Bedienmoduls sowie bei Ausfall der Fremd- bzw. Hilfskraftquelle, über die am Bedienmodul wirksame physische Betätigungskraft des Fahrers beaufschlagt wird. Darüber hinaus wird im Falle der Notbremsung sowie bei Betätigung des Bedienmoduls über die Steuereinheit automatisch zumindest ein elektrisch betätigbarer Aktuator eines Feststellbremssystems angesteuert, durch den wiederum wenigstens eine Radbremse mit einer Bremskraft beaufschlagt wird. Die Bremsanlage erkennt somit den Ausfall der Fremd- bzw. Hilfskraftquelle und bewirkt bei Betätigung des Bedienmoduls, d. h. bei vorliegendem Bremswunsch des Fahrers, automatisch eine Ansteuerung zumindest eines Aktuators des Feststellbremssystems, um die an den Radbremsen verursachte Gesamtbremswirkung zu verstärken. Der Fahrer braucht dazu kein zusätzliches Bedienelement zu betätigen. Er betätigt in gewohnter Weise das Bedienmodul, das üblicherweise eine Pedaleinheit aufweist. Die koordinierte Überlagerung seiner physisch an der Pedaleinheit eingeleiteten Betätigungskraft mit der Betätigungskraft vom Aktuator zu einer resultierenden Gesamtbremskraft an den einzelnen Radbremse erfolgt innerhalb der Bremsanlage automatisch durch Eingriff der elektronischen Steuereinheit.

Eine besonders vorteilhafte Ausführung des Verfahrens zur Steuerung der genannten Bremsanlage im Falle einer Notbremsung wird dadurch erreicht, dass durch die Steuereinheit bei Betätigung des Bedienmoduls sowie bei Erkennung eines Ausfalles der Fremd- bzw. Hilfskraftquelle eine blockadefreie Beaufschlagung zumindest der Radbremsen an der Hinterachse des Kraftfahrzeuges geregelt wird. Dabei wird die blockadefreie Beaufschlagung der einzelnen Radbremsen durch koordinierten Eingriff der elektronischen Steuereinheit realisiert. Dazu umfasst die Steuereinheit unter anderem ein Modul zur elektronischen Bremskraftverteilung. Insgesamt wird durch die Steuereinheit die zur Verfügung stehende Bremskraft des Aktuators des Feststellbremssystems je nach aktuellem Zustand an den einzelnen Kraftfahrzeugrädern auf die einzelnen Radbremsen verteilt, ohne dass eine Blockade an einem der Kraftfahrzeugräder auftritt. Die demgemäß genau dimensionierte Beaufschlagung der einzelnen Radbremsen ist selbstverständlich nicht auf die Räder der Hinterachse beschränkt, sondern lässt sich vielmehr auch bei allen Rädern des Kraftfahrzeuges anwenden. Voraussetzung dafür ist jedoch, dass die jeweiligen Radbremsen von der Bremskraft des Aktuators beaufschlagt werden können.

Eine besonders sinnvolle Anwendung des Verfahrens zur Steuerung der beschriebenen Bremsanlage ergibt sich dadurch, dass bei einer Notbremsung durch die am Bedienmodul wirksame Betätigungskraft des Fahrers zumindest die Radbremsen der Vorderachse des Kraftfahrzeuges beaufschlagt werden. Das bedeutet, dass der Fahrer bei einem Ausfall der Fremd- bzw. Hilfskraftquelle nicht mehr in der Lage ist, allein durch die von ihm selbst physisch über das Bedienmodul eingeleitete Betätigungskraft (bzw. Muskelkraft) alle Radbremsen mit einer Restbremskraft zu beaufschlagen. Daher werden nur die Radbremsen der Vorderachse mit dieser vom Fahrer physisch bereitgestellten Betätigungskraft versorgt. Die Radbremsen der Hinterachse werden bei der Notbremsung vorteilhaft durch zumindest einen Aktuator des Feststellbremssystems beaufschlagt. Allerdings muss die Beaufschlagung der Radbremsen durch den Aktuator nicht notwendigerweise auf die Radbremsen der Hinterachse beschränkt werden. Falls die vom Fahrer durch Muskelkraft aufgebrachte Bremsleistung an den Radbremsen der Vorderachse nicht ausreichen sollte, können diese Radbremsen zusätzlich auch mit einem Teil der vom Aktuator bereitgestellten Betätigungskraft beaufschlagt werden. Dazu ist es allerdings erforderlich, dass auch Radbremsen der Vorderachse jeweils an einen Aktuator gekoppelt sind. Dies kommt insbesondere zum tragen, wenn innerhalb des Feststellbremssystems auch den Radbremsen der Vorderachse jeweils ein eigener Aktuator zugeordnet ist.

Eine besonders vorteilhafte Ausführung einer erfindungsgemäßen Bremsanlage wird anhand der einzigen Figur in einer Prinzipdarstellung gezeigt und im folgenden näher erläutert.

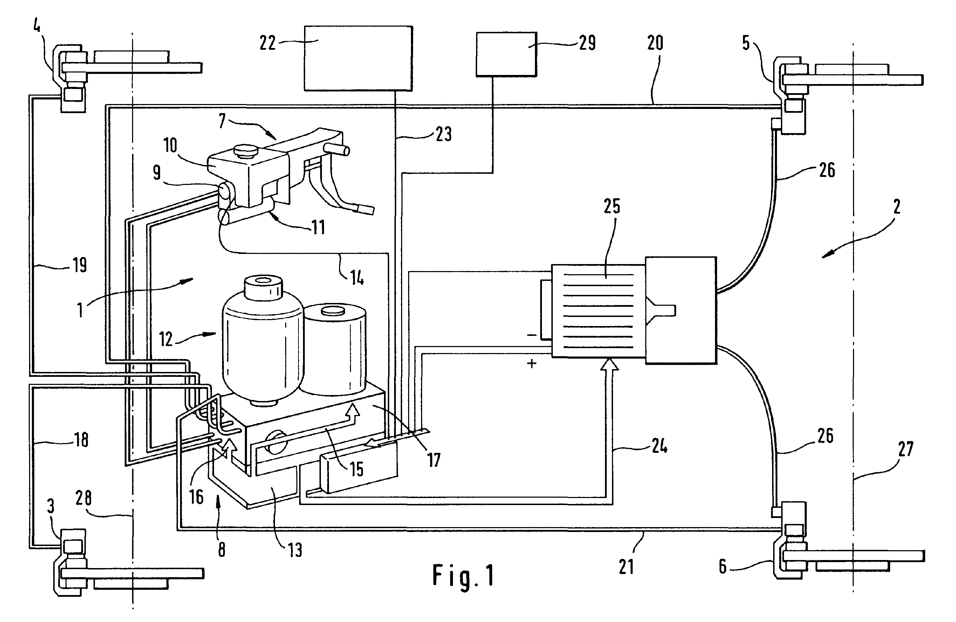

Die in Figur 1 gezeigte Bremsanlage für eine Kraftfahrzeug umfasst ein Betriebs- 1 und ein Feststellbremssystem 2, die miteinander vernetzt ausgebildet sind um je nach Fahrzustand des Fahrzeugs sowie Fahrerbremswunsch koordiniert eingesetzt zu werden. Zur gesamten Bremsanlage gehören vier Radbremsen 3, 4, 5, 6, die üblicherweise als Reibungsbremsen ausgeführt sind und vom Betriebs- und/oder Feststellbremssystem mit einer Bremskraft bzw. einem Bremsdruck beaufschlagt werden können. Das Betriebsbremssystem 1 ist als elektro-hydraulisches Bremssystem ausgeführt und weist ein Bedienmodul 7 und eine Betätigungseinheit 8 auf. Dabei dient das Bedienmodul 7 der Erfassung des Fahrerwunsches hinsichtlich einer Betriebsbremsbetätigung. Ein solches Bedienmodul 7 wird häufig in Form einer Pedaleinheit 7 realisiert, über die der Fahrer mittels Fußbetätigung seinen Bremsbetätigungswunsch einleiten kann. Dazu umfasst das als Pedaleinheit ausgebildete Bedienmodul 7 einen an das Bremspedal gekoppelten Hauptbremszylinder 9 mit Druckmittelvorratsbehälter 10 sowie einen Pedalwegsimulator 11 mit Betätigungswegsensor. Im Normalbetrieb der Bremsanlage wird der Betätigungswunsch über den Pedalwegsimulator 11 mit Betätigungswegsensor erfasst und elektrisch als Ansteuersignal an die Betätigungseinheit 8 übermittelt. Die Betätigungseinheit 8 besitzt eine elektrisch ansteuerbare Fremdkraftquelle 12, die als elektro-hydraulisches Motor-Pumpen-Aggregat mit Druckspeicher ausgeführt ist, und eine elektronische Steuereinheit 13 zur Koordinierung der Ansteuerung der Fremdkraftquelle 12. Im einzelnen wird bei einer Pedalbetätigung am Bedienmodul 7 ein dem Fahrerwunsch entsprechendes Ansteuersignal über eine Signalleitung 14 der Steuereinheit 13 zugeführt, aus dem die Steuereinheit 13 ein entsprechendes Betätigungssignal 15 für die Fremdkraftquelle 12 und diesbezügliche Ansteuersignale 16 für einen Ventilblock 17 generiert. Innerhalb des Ventilblocks 17 werden mittels elektrisch schaltbarer Ventile die zu den Radbremsen 3, 4, 5, 6 führenden hydraulischen Druckleitungen 18, 19, 20, 21 mit dem von der Fremdkraftquelle 12 bereitgestellten hydraulischen Bremsdruck beaufschlagt. Im Normalzustand des Betriebsbremssystems 1 werden dabei mittels der Steuereinheit 13 üblicherweise alle Radbremsen 3, 4, 5, 6 beaufschlagt unter Berücksichtigung bekannter Fahrerassistenzfunktionen, wie z. B. ABS-, ESP-Funktion etc..

Das Feststellbremssystem 2 ist elektrisch betätigbar ausgeführt und umfasst dazu ein Bedienelement 22, das vorzugsweise als elektrischer Schalter oder Taster ausgebildet ist. Das Bedienelement 22 dient der Erfassung des Fahrerwunsches hinsichtlich der Feststellbremsbetätigung und leitet entsprechende Signale über eine Signalleitung 23 an die zentrale elektronische Steuereinheit 13 weiter. Die Steuereinheit 13 generiert daraus im Normalbetrieb der Bremsanlage unter Berücksichtigung des Fahrzustands des Fahrzeugs sowie des Betätigungszustands des Betriebsbremssystems 1 ein Ansteuersignal 24 für einen elektro-mechanischen Aktuator 25, der an zumindest eine Radbremse 5, 6 gekoppelt ist. Der Aktuator 25 erzeugt ausgehend von seinem Ansteuersignal 24 eine entsprechende Bremsbetätigungskraft, durch die die Radbremsen 5, 6 über flexible Übertragungsmittel 26 beaufschlagt werden. Dabei ist es für die grundlegende Funktion zunächst unerheblich, ob jede Radbremse 5, 6 von einem jeweils zugeordneten Radaktuator beaufschlagt wird oder ob ein Zentralaktuator 25, wie in Fig. 1, für die Beaufschlagung mehrerer Radbremsen 5, 6 verantwortlich ist. Darüber hinaus ist in Fig. 1 eine besonders weit verbreitete Bauform eines Feststellbremssystems 2 dargestellt, bei dem eine Beaufschlagung der Radbremsen 5, 6 lediglich an der Fahrzeughinterachse 27 erfolgt. Selbstverständlich lässt sich das beschriebene Feststellbremssystem 2 analog derart umgestalten, dass zumindest ein Aktuator nur auf die Radbremsen der Kraftfahrzeugvorderachse bzw. auf alle Radbremsen einwirkt.

Grundsätzlich kann man die in Fig. 1 dargestellte Bremsanlage durch Berücksichtigung zusätzlicher Daten bei der Beaufschlagung der Radbremsen in ihrer Funktionalität erweitern. Dies lässt sich beispielsweise durch Anordnung weiterer Sensoren 29 zur Erfassung von fahrzeugspezifischen Zustandsdaten realisieren, deren Daten bei der Bremsregelung herangezogen werden. Solche Sensoren (z. B. Neigungswinkelsensor etc.) sowie die Berücksichtigung ihrer Sensordaten ermöglichen somit die Umsetzung von komfortablen Fahrerassistenzfunktionen (z. B. Anfahrhilfe, Hill-Holder, automatische Feststellbremse etc.) innerhalb der Bremsanlage.

Die bereits erwähnte Vernetzung von Betriebs- und Feststellbremssystem insbesondere über die Steuereinheit 13 gestattet eine erhebliche Verbesserung der Leistungsfähigkeit der Bremsanlage speziell bei Fehlern bzw. Teilausfällen in der Bremsanlage. So steht beispielsweise bei einem Ausfall der Fremdkraftquelle 12 bzw. der Energieversorgung dieser Fremdkraftquelle 12 innerhalb der Bremsanlage zunächst keine elek-trohydraulische Bremskraft zur Umsetzung des vom Fahrer physisch eingeleiteten Bremsbetätigungswunsches zur Verfügung. Diese über Muskelkraft des Fahrers am Bedienmodul 7 bzw. der Pedaleinheit anliegende Betätigungskraft wird bei erkanntem Fehler in der Steuereinheit 13 durch die Betätigungseinheit 8 lediglich in die Radbremsen 3, 4 der Kraftfahrzeugvorderachse 28 eingeleitet. Dies erweist sich als besonders vorteilhaft, da an der Vorderachse ein größerer Anteil der Bremsleistung umgesetzt wird und da an der Hinterachse 27 ohnehin das Feststellbremssystem 2 noch wirksam einsetzbar ist. Dazu generiert die Steuereinheit 13 bei erkanntem Fehler in der Fremdkraftquelle 12 bzw. ihrer Energieversorgung sowie bei einem am Bedienmodul 7 vorliegenden Bremsbetätigungswunsch des Fahrers ein elektrisches Ansteuersignal 24 für zumindest einen Aktuator 25 des Feststellbremssystems 2. Der Aktuator 25 wiederum beaufschlagt über flexible Übertragungsmittel 26, beispielsweise Bowdenzüge oder ähnliches, die Radbremsen 5, 6 mit der dem Fahrerwunsch entsprechenden Betätigungskraft. Im Falle einer solchen Notbremsung wird somit die physisch vom Fahrer eingeleitetet Betätigungskraft mit der vom Aktuator 25 gelieferten Betätigungskraft überlagert, um eine verstärkte Gesamtbremswirkung zu erzielen. Dabei wird durch die Steuereinheit 13 die Beaufschlagung der Radbremsen 5, 6 mittels des Aktuators 25 derart koordiniert, dass die betreffenden Kraftfahrzeugräder blockadefrei abrollen. Damit kann bei entsprechendem Fahrerwunsch die maximal mögliche Bremskraft in die Radbremsen 5, 6 eingeleitet werden unter gleichzeitiger Gewährleistung der ABS-Funktion.

Grundsätzlich ist es nicht notwendigerweise erforderlich nur einen einzigen Zentralaktuator 25 entsprechend Fig. 1 zu verwenden, der mehrere Radbremsen 5, 6 mit einer Bremskraft beaufschlagt. Analog lassen sich auch mehrere Aktuatoren einsetzen, z. B. Radaktuatoren, die jeweils nur eine Radbremse beaufschlagen. Ferner ist die Unterstützung der begrenzten Betätigungskraft des Fahrers in einer Notbremssituation durch zumindest einen Aktuator 25 des Feststellbremssystems 2 nicht auf eine reine Ansteuerung der Radbremsen 5, 6 an der Kraftfahrzeughinterachse 27 beschränkt. Sollte das Feststellbremssystem 2 auch ansteuerbare Radbremsen 3, 4 an der Vorderachse 28 aufweisen, so könnten erfindungsgemäß selbstverständlich auch diese zur Erhöhung der Gesamtbremswirkung beaufschlagt werden. Außerdem ist es denkbar die dem Feststellbremssystem 2 zugeordneten Radbremsen, z. B. Trommelbremsen, von den dem Betriebsbremssystem 1 zugeordneten Radbremsen 3, 4, 5, 6, z. B. Scheibenbremsen, getrennt auszuführen. Demgegenüber sind in Fig. 1 an der Hinterachse 27 kombinierte Scheibenbremsen als Radbremsen 5, 6 dargestellt, die im Normalzustand sowohl vom Betriebs- 1 als auch vom Feststellbremssystem 2 angesteuert werden können.

In der einzigen Figur ist die Erfindung am Beispiel einer elektro-hydraulischen Bremsanlage mit einem Motor-Pumpen-Aggregat als Fremdkraftquelle 12 verdeutlicht. Letztlich lässt sich die Erfindung jedoch auf jede Bremsanlage mit einer Fremd- bzw. Hilfskraftquelle 12 zur Ansteuerung der Radbremsen 3, 4, 5, 6 im Normalzustand übertragen. Voraussetzung ist die Möglichkeit der direkten Beaufschlagbarkeit zumindest einer Radbremse mit der physisch eingeleiteten Bremsbetätigungskraft des Fahrers bei Ausfall der Fremd- bzw. Hilfskraftquelle. Dies trifft beispielsweise zu auf Bremsanlagen mit einem elektrisch, hydraulisch oder pneumatisch wirksamen Bremskraftverstärker bzw. Booster, einem fremdansteuerbaren Druckspeicher, einem fremdansteuerbaren Motor-Pumpen-Aggregat oder ähnlichen Kraftquellen.

## Patentansprüche

1. Bremsanlage für ein Kraftfahrzeug mit einem Bedienmodul (7) zur Aufnahme eines Fahrerwunsches, mit einer insbesondere elektrisch betätigbaren Fremd- bzw. Hilfskraftquelle (12), die vom Bedienmodul (7) ansteuerbar ist und mit deren Kraft Radbremsen (3, 4, 5, 6) des Kraftfahrzeuges durch eine elektronische Steuereinheit (13) beaufschlagbar sind und mit einem Mittel zur Erkennung eines Ausfalls der Fremd- bzw. Hilfskraftquelle (12), wobei zumindest eine Radbremse (3, 4) im Falle einer Notbremsung, d. h. bei Betätigung des Bedienmoduls (7) sowie bei Ausfall der Fremd- bzw. Hilfskraftquelle (12), über die am Bedienmodul (7) wirksame Betätigungskraft des Fahrers beaufschlagbar ist, **dadurch gekennzeichnet, dass** die Bremsanlage zumindest einen elektrisch betätigbaren Aktuator (25) eines Feststellbremssystems (2) aufweist, durch den wenigstens eine Radbremse (5, 6) beaufschlagbar ist und der mit der Steuereinheit (13) verbunden ist, wobei der Aktuator (25) bei einer Notbremsung automatisch mittels der Steuereinheit (13) ansteuerbar ist.

2. Bremsanlage nach Anspruch 1, **dadurch gekennzeichnet, dass** die Fremd- bzw. Hilfskraftquelle (12) ein elektro-hydraulisches Motor-Pumpen-Aggregat umfasst.

3. Bremsanlage nach Anspruch 1, **dadurch gekennzeichnet, dass** die Fremd- bzw. Hilfskraftquelle (12) einen Bremskraftverstärker bzw. Booster umfasst.

4. Bremsanlage nach Anspruch 1, **dadurch gekennzeichnet, dass** die Fremd- bzw. Hilfskraftquelle (12) einen insbesondere elektrisch fremdansteuerbaren Druckspeicher umfasst.

5. Verfahren zur Steuerung einer Bremsanlage für ein Kraftfahrzeug mit einem Bedienmodul (7) zur Aufnahme eines Fahrerwunsches, mit einer insbesondere elektrisch betätigbaren Fremd- bzw. Hilfskraftquelle (12), die vom Bedienmodul (7) ansteuerbar ist und mit deren Kraft Radbremsen (3, 4, 5, 6) des Kraftfahrzeuges durch eine elektronische Steuereinheit (13) beaufschlagt werden und mit einem Mittel zur Erkennung eines Ausfalles der Fremd-bzw. Hilfskraftquelle (12), wobei zumindest eine Radbremse (5, 6) im Falle einer Notbremsung, d. h. bei Betätigung des Bedienmoduls (7) sowie bei Ausfall der Fremd-bzw. Hilfskraftquelle (12), über die am Bedienmodul (7) wirksame Betätigungskraft des Fahrers beaufschlagt wird, **gekennzeichnet durch** zumindest einen elektrisch betätigbaren Aktuator (25) eines Feststellbremssystems (2), **durch** den wenigstens eine Radbremse (5, 6) beaufschlagbar ist und der mit der Steuereinheit (13) verbunden ist, wobei der Aktuator (25) bei Betätigung des Bedienmoduls (7) sowie bei Erkennung eines Ausfalles der Fremd- bzw. Hilfskraftquelle (12) mittels der Steuereinheit (13) angesteuert wird, um ergänzend zur Beaufschlagung mittels der Betätigungskraft des Fahrers zumindest eine Radbremse (5, 6) mittels des Aktuators (25) zu beaufschlagen.

6. Verfahren zur Steuerung einer Bremsanlage nach Anspruch 5, **dadurch gekennzeichnet, dass** durch die Steuereinheit (13) bei Betätigung des Bedienmoduls (7) sowie bei Erkennung eines Ausfalles der Fremd- bzw. Hilfskraftquelle (12) eine blockadefreie Beaufschlagung zumindest der Radbremsen (5, 6) an der Hinterachse (27) des Kraftfahrzeuges geregelt wird.

7. Verfahren zur Steuerung einer Bremsanlage nach einem der Ansprüche 5 oder 6, **dadurch gekennzeichnet, dass** bei einer Notbremsung durch die am Bedienmodul (7) wirksame Betätigungskraft des Fahrers zumindest die Radbremsen (3, 4) der Vorderachse (28) des Kraftfahrzeuges beaufschlagt werden.

8. Verfahren zur Steuerung einer Bremsanlage nach einem der Ansprüche 5-7, **dadurch gekennzeichnet, dass** bei einer Notbremsung durch den Aktuator (25) des Feststellbremssystems (2) zumindest die Radbremsen (5, 6) der Hinterachse (28) des Kraftfahrzeuges beaufschlagt werden.
